# EUROPÄISCHE PATENTANMELDUNG

(11) **EP 4 212 458 A1**
(43) Veröffentlichungstag der Anmeldung: **19.07.2023**
(21) Anmeldenummer: 23152030.5
(22) Anmeldetag: 17.01.2023
(51) Int. Cl.: B65G 1/02, B65D 6/00, H01F 7/02

(54) **LAGERREGAL, LAGERBEHÄLTER UND LAGERSYSTEM MIT LAGERREGAL UND LAGERBEHÄLTER**

(30) Priorität: 17.01.2022 DE 102022100959
(71) Anmelder: BITO-Lagertechnik Bittmann GmbH, 55590 Meisenheim (DE)
(72) Erfinder: GASSNER, Okten, 55571 Odernheim (DE)
(74) Vertreter: Richardt Patentanwälte PartG mbB

(57) **Zusammenfassung**

In einem Regalsystem aus einem Lagerregal (100) und zumindest einem Lagerbehälter (200) ist vorgesehen, dass an einem Fach des Lagerregals (100) ein Magnet (160) angeordnet ist, mithilfe dessen der Lagerbehälter (200) fixierbar ist, wobei der Lagerbehälter (200) insbesondere ein magnetisierbares Metall aufweist, zum Beispiel in Form von in Kunststoff eingebetteten Partikeln (250) oder von Metallstücken (260).

## Beschreibung

Die Erfindung betrifft ein Lagerregal mit Fächern zur Aufnahme von Lagerbehältern, einen zugehörigen Lagerbehälter sowie ein System aus dem Lagerregal mit zumindest einem solchen zugehörigen Lagerbehälter.

Lagerregale mit Fächern zur Aufnahme von Lagerbehältern sind allgemein bekannt und bestehen typischerweise aus einer Mehrzahl von miteinander verbundenen (insbesondere verschraubten) vertikalen und horizontalen Streben, wobei sogenannte Regalpaneele vorgesehen sind (die insbesondere in das Gerüst aus den Streben eingesetzt oder eingesteckt und optional auch verschraubt sind). Die Regalpaneele stellen eine Auflagefläche für jeweilige Lagerbehälter in einem Fach bereit.

Die Lagerbehälter werden entweder von Hand oder auch mithilfe einer verfahrbaren Einheit , z.B. ein Regalbediengerät, z.B. ein "Regalshuttle" in die jeweiligen Fächer verbracht. In beiden Fällen kann es zu einer gewissen Variation in der genauen Ausrichtung, Einschubtiefe etc. der Lagerbehälter in dem Fach kommen. Dies wiederum erschwert ein späteres Wiederherausziehen, insbesondere ein automatisiertes Herausziehen (bei Verwendung des Regalshuttles).

Der Erfindung liegt nun die Aufgabe zugrunde, ein verbessertes Lagerregal mit passendem Lagerbehälter sowie ein entsprechendes System aus Lagerregal und Lagerbehälter
oder -behältern zu schaffen.

Die der Erfindung zugrundeliegende Aufgabe wird mit den Merkmalen der unabhängigen Patentansprüche gelöst. Bevorzugte Ausführungsformen der Erfindung sind in den abhängigen Patentansprüchen angegeben.

Nach Ausführungsformen der Erfindung weist das Lagerregal mit Fächern zur Aufnahme von Lagerbehältern an zumindest einem der Fächer einen Magneten auf, um einen Lagerbehälter zu fixieren.

Es ist wesentlich ökonomischer, einen Magneten an einem Lagerregal vorzusehen, mithilfe dessen der Lagerbehälter fixiert wird, als die Magnetkraft durch einen an dem Lagerbehälter selbst angebrachten Magneten aufzubringen. Da die Anzahl der eingesetzten Lagerbehälter typischerweise größer ist als die Zahl der Fächer des Lagerregals (es sind immer einige Lagerbehälter unterwegs auf dem Transportweg und dergleichen), müssen insgesamt weniger Magneten vorgesehen werden. Ferner kann es vorteilhaft sein, dass das mit dem Lagerbehälter transportierte Stückgut dem Magnetfeld der Magneten weniger stark ausgesetzt ist, als dies der Fall wäre, sollte der Magnet im Behälter selbst untergebracht sein. Letzteres würde bestimmte Arten von Stückgut für den Transport ausschließen, wie etwa sehr empfindliche Elektronikbauteile oder elektrische Geräte mit ferromagnetischem Gehäuse, das dann aufmagnetisiert werden würde etc. Ein weiterer Vorteil von am Lagerregal vorgesehenen Magneten ist, dass durch den möglichen Verzicht von Magneten im/am Behälter eine etwaige magnetische Beeinflussung des Regalbediengeräts oder anderer Systeme zum Transport des Lagerbehälters ausgeschlossen wird.

Durch das Fixieren des Lagerbehälters mit dem Magneten ist gewährleistet, dass der Lagerbehälter in dem Fach z.B. im Wesentlichen immer an einer vorbestimmten Stelle, z.B. in einer vorbestimmten Tiefe (gesehen von einer Einführseite her) sitzt. Dies erleichtert es, mithilfe eines automatisiert arbeitenden Systems (Regalshuttle) den Lagerbehälter zu ergreifen und herauszunehmen.

Nach Ausführungsformen der Erfindung ist ein und vorzugsweise jeder Magnet als Permanentmagnet ausgebildet. Dies ist eine preisgünstige Lösung. Insbesondere bei alternativ vorsehbaren Elektromagneten muss elektrische Energie zugeführt werden, die bei den Permanentmagneten entbehrlich ist. Eine Ausführungsform mit Elektromagneten allerdings hat den Vorteil, dass die Magnetisierung auch wieder aufgehoben werden könnte, um das Herausnehmen des Lagerbehälters zu erleichtern. Sollte im Behälter zur magnetischen Fixierung desselben über die besagten Magnete statt eines magnetisierbaren Materials ebenfalls ein Permanentmagnet zum Einsatz kommen, wäre im Fall der besagten Elektromagnete sogar ein Umpolen derselben möglich, um eine der fixierenden Kraft entgegengesetzte Kraft aufzuprägen.

Nach Ausführungsformen der Erfindung weist jedes Fach eine Einführseite auf, von der her der jeweilige Lagerbehälter einbringbar ist, wobei jeder jeweilige Magnet auf der der Einführseite gegenüberliegenden Seite des Faches angeordnet ist. Dadurch, dass der Magnet sozusagen "ganz hinten" im Fach vorgesehen ist, muss die Magnetkraft beim Herausziehen des Lagerbehälters nur kurz überwunden werden und wirkt dann nicht weiter, sobald der Lagerbehälter ein wenig weggezogen ist. Dies erleichtert das Herausnehmen. Der hinten angeordnete Magnet beeinflusst auch in geringerem Maße andere Systeme wie etwa das an der Vorderseite des Regals bewegte Regalbediengerät, z.B. das Regalshuttle.

Nach Ausführungsformen der Erfindung sind zu jedem Fach zwei der Magnete bereitgestellt Jedes Fach weist z.B. eine sich in eine Regallängsrichtung erstreckende Einführseite auf. Gemäß einer ersten Alternative ist die Polrichtung der beiden Magnete eines Fachs identisch, z.B. zumindest auf 15°, vorzugsweise auf 10°, weiter vorzugsweise auf 5° genau identisch. Die beiden Magnete sind in diesem Beispiel in der Regallängsrichtung zueinander versetzt angeordnet. Bei identischer Polrichtung hebt sich das Feld der beiden Magnete in dem Lagerbehälter im Zwischenraum auf, so dass im Lagerbehälter empfindliches Stückgut in besonders geringem Maße noch ein Restmagnetfeld erfährt.

Gemäß der zweiten Alternative sind die beiden Magnete in der Regallängsrichtung ebenfalls zueinander versetzt. Die Polrichtung der beiden Magnete ist aber zueinander umgekehrt, z.B. auf 15°, vorzugsweise 10°, besonders vorzugsweise 5° genau zueinander umgekehrt. In diesem Falle verlaufen die magnetischen Feldlinien gegebenenfalls durch den Behälter, was in manchen Fällen sogar erwünscht sein kann, wobei gegebenenfalls der Lagerbehälter passend zu diesen Magnetfeldlinien ein auf das Magnetfeld ansprechendes Material aufweisen kann. Durch die umgekehrte Polung wird das Magnetfeld verstärkt, die Kraft zur Fixierung des Behälters wird also maximiert.

In einem weiteren Aspekt betrifft die Erfindung einen Lagerbehälter für ein Lagerregal gemäß der oben beschriebenen Art, wobei der Lagerbehälter einen Kunststoffkörper umfasst und in den Kunststoffkörper Metall eingebracht ist, das von einem in einem Fach des Lagerregals angeordneten Magneten magnetisierbar ist. Mit anderen Worten muss also das Metall in dem Kunststoffkörper kein Permanentmagnet sein, was die Herstellung des Lagerbehälters im Ganzen erleichtert.

Das Metall kann insbesondere im Bodenbereich des Lagerbehälters vorgesehen sein, wobei der Lagerbehälter mit dem Boden auf den Magneten aufgesetzt oder an ihn angesetzt wird. Das Metall kann auch z.B. in Form von Metallstücken, Platten oder Stäben in entsprechenden Aufnahmen im Boden des Behälters aufgenommen, z.B. eingeschoben sein. Es ist auch möglich, dass das Metall vom Kunststoff des Lagerbehälters im Rahmen eines Spritzgussprozesses (z.B. vollständig) umspritzt wurde und daher insbesondere permanent im Behälter fixiert aufgenommen ist. Das Metall kann jeweils an der Vorder- und Rückseite des Behälters angebracht sein, um unabhängig von der Orientierung auf den in dem Fach "ganz hinten" angeordneten Magneten anzusprechen (hier jeweils nur mit der einen Seite). Diese Variante ist dann bevorzugt, wenn es für den Behälter eine definierte Einlagerungsrichtung gibt, sodass das Metall in der Einlagerungsrichtung des Behälters an dessen Vorder- und Rückseite im oder am Boden angeordnet ist.

Vorzugsweise ist das Metall ausschließlich in einem Bodenbereich des Lagerbehälters bereitgestellt, damit in dem Lagerbehälter befindliches Stückgut möglichst wenig beeinflusst wird.

Nach Ausführungsformen ist der Lagerbehälter mit weichmagnetischem Metall versehen. Dies verhindert eine Aufmagnetisierung des Metalls, die nach einem Herausnehmen des Lagerbehälters aus dem Lagerregal fortbestehen würde.

Nach Ausführungsformen ist das Metall in Form von in dem Kunststoff des Behälters verteilten Partikeln bereitgestellt. So wird die Herstellung vereinfacht: Zum Beispiel kann der zur Behälterherstellung verwendete Kunststoff Metallpartikel aufweisen. Somit können die Partikeln einfach bei einer Spritzgussherstellung des Lagerbehälters aus Kunststoff vorgesehen werden. Vorzugsweise wird der die Metallpartikel aufweisende Kunststoff nur im Bodenbereich des Behälters vorgesehen, wobei die Wände des Behälters hingegen frei von den Metallpartikeln sind.

In einem weiteren Aspekt betrifft die Erfindung ein Lagersystem mit einem Lagerregal gemäß der oben beschriebenen Art und mit zumindest einem in einem seiner Fächer eingelagerten und durch einen zugehörigen Magneten fixierten Lagerbehälter gemäß der oben beschriebenen Art.

Nach Ausführungsformen umfasst das Lagersystem ein Regalshuttle.

Im Folgenden werden Ausführungsformen der Erfindung anhand der Zeichnungen näher erläutert. Es zeigen:
- Fig. 1: in perspektivischer Darstellung einen Ausschnitt aus einem Lagerregal mit einem Fach für einen im Lagerregal gezeigten Lagerbehälter, wobei bei dem Lagerregal die Erfindung anwendbar ist,
- Fig. 2: das Lagerregal aus Fig. 1 rückseitig im halboffenen Schnitt und
- Fig. 3: einen Ausschnitt aus dem Lagerregal mit dem Lagerbehälter aus Fig. 2, in dem der Permanentmagnet zu sehen ist,
- Fig. 4: eine schematische Darstellung eines Lagerbehälters mit eingebetteten Metallpartikeln, der durch zwei gleichpolige Permanentmagnete in einem Fach eines Lagerregals fixiert werden soll, im Schnitt; und
- Fig. 5: eine schematische Darstellung eines Lagerbehälters mit eingebetteten Metallpartikeln, der durch zwei gegenpolig angeordnete Permanentmagnete in einem Fach eines Lagerregals fixiert werden soll, im Schnitt.

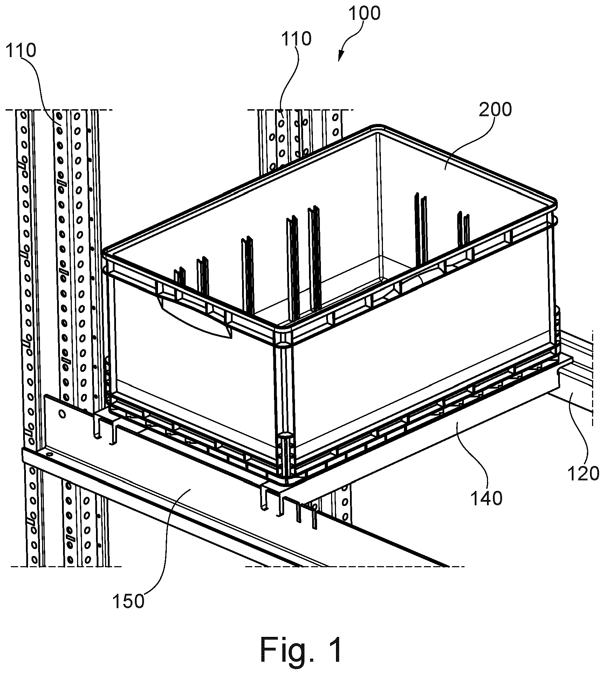

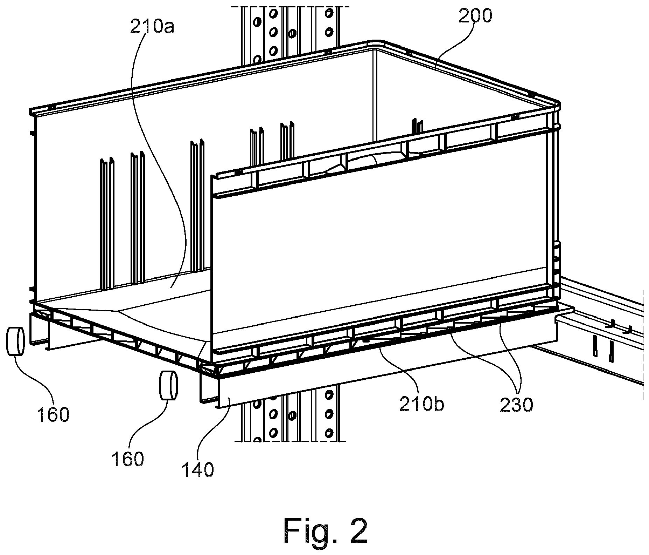

Ein im Ganzen mit 100 bezeichnetes Lagerregal besteht aus vertikal stehenden Regalstützen 110 und daran montierten horizontal verlaufenden Regalstreben 120. Zwischen den beiden in Fig. 1 zu sehenden horizontalen Streben 120 sind Regalpaneele angeordnet, wobei vorliegend als Regalpaneele zwei unten halboffene Profile 140 (besser in Fig. 2 zu sehen) eine Ablagefläche für einen Lagerbehälter 200 bereitstellen. Die Regalpaneele 140 erstrecken sich in die Regaltiefe, d.h. in die Ein- und Auslagerungsrichtung entsprechender im Regal zu lagernder Lagerbehälter.

Aus Fig. 1 ist auch eine an der horizontalen Strebe 120 angebrachte Schiene 150 ersichtlich, die alleine oder im Zusammenwirken mit einer hier nicht gezeigten zweiten zum Beispiel gegenüberliegenden oder höher oder tiefer liegenden Schiene ein Verfahren eines Regalbediengeräts, z.B. eines Schienenfahrzeugs ("Regalshuttle") entlang der Längsrichtung des Lagerregals 100 ermöglicht. Mithilfe eines solchen z.B. Regalbediengeräts werden Lagerbehälter 200 zu den jeweiligen Feldern transportiert und sie werden von dem Regalbediengerät in das Fach vollständig eingeschoben.

Ein Lagerbehälter 200 ist typischerweise aus beziehungsweise unter Verwendung von Kunststoff ausgebildet.

Um die Platzierung der Lagerbehälter 200 besonders präzise festzulegen, sind die in Fig. 2 gezeigten Permanentmagnete 160 vorgesehen, die auf in der Zeichnung nicht gezeigte Weise an dem Lagerregal 100 angeordnet sind. Beispielhaft sind in Fig. 2 zwei Magnete gezeigt und vorgesehen, es ist davon abweichend jedoch auch die Verwendung von einem oder mehr als 2 Magneten möglich. Ohne Beschränkung der Allgemeinheit wird im Folgenden immer von 2 Magneten ausgegangen. Vorzugsweise ist die Anordnung des einen oder der mehreren Permanentmagnete der Gestalt, dass diese ausschließlich auf der der Einführseite der einzulagernden Lagerbehälter gegenüberliegenden Seite des Faches angeordnet sind. In der Figur 1 ist dies in Richtung der Regaltiefe die Seite des Regals, welche von der Schiene 150 abgewandt ist.

Die Permanentmagnete können z.B. von unten in den halboffenen Profilen 140 der Paneele aufgenommen sein. Sie können jedoch auch in entsprechenden Vertiefungen oder Aussparungen der Paneele aufgenommen sein.

Der Lagerbehälter 200 ist nun vorliegend doppelbödig und weist eine obere Bodenfläche 210a und die untere Bodenoberfläche 210b auf. Optionale schrägstehende Rippen stützen die obere Bodenoberfläche 210a gegen die untere Bodenoberfläche 210b ab.

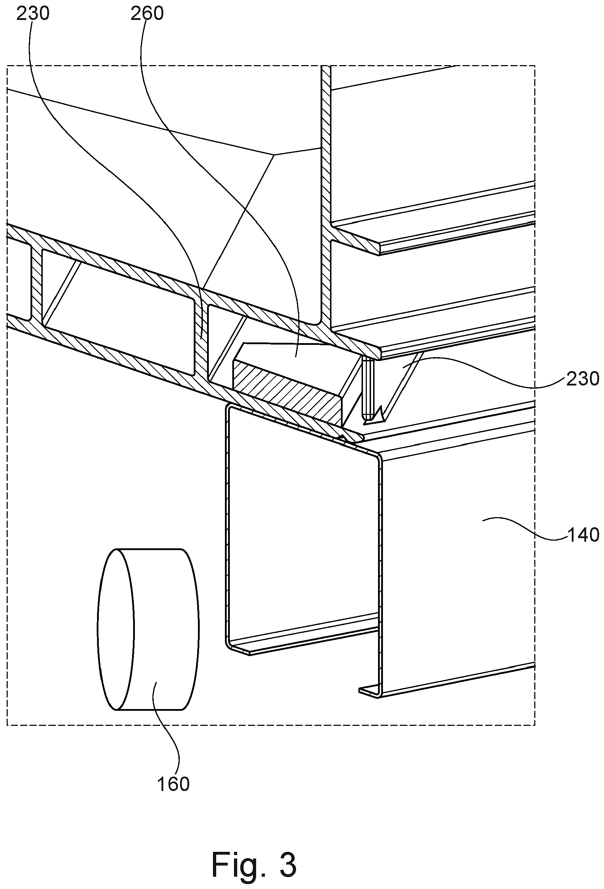

Fig 3 zeigt eine Vergrößerungsansicht, aus der ersichtlich ist, dass ein insbesondere massives Metallstück 260 insbesondere zwischen den beiden vorderen äußeren Rippen 230 eingeschoben ist. Es ist jedoch verständlich, dass ein solches Metallstück auch in anderer Weise im Bodenbereich des Behälters aufgenommen sein kann, z.B. in diesen eingeclipst, eingeschoben oder gar permanent eingegossen sein.

Diese Metallstück wird aufgrund der Wirkung des Magnetfeldes des zugehörigen Permanentmagneten 160 angezogen. Im Bereich des zweiten Permanentmagneten 160 gibt es ein entsprechendes Metallstück, das von jenem Permanentmagneten 160 magnetisch angezogen wird. Die Metallstücke 260 bestehen zum Beispiel aus Weicheisen, Stahl mit niedrigem Kohlenstoffanteil, Stahl mit Silizium-Zusatz (FeSi), Elektroblech oder -band, einer Nickel-Eisen-Legierung (FeNi), einer Cobalt-Eisen-Legierung (FeCo), einer FeAl-Legierung, einer FeAlSi-Legierung oder Ferrit. Durch das Magnetfeld der Permanentmagnete 160 wird der Lagerbehälter 200 besonders präzise an der gewünschten Stellung gehalten.

Alternativ können im Kunststoffboden des Lagerbehälters 200 Metallpartikeln eingebettet sein, die durch das Verbringen in die Nähe des Permanentmagneten 160 magnetisiert werden. Auch solche Metallpartikeln bestehen zum Beispiel aus Weicheisen, Stahl mit niedrigem Kohlenstoffanteil, Stahl mit Silizium-Zusatz (FeSi), Elektroblech oder -band, einer Nickel-Eisen-Legierung (FeNi), einer Cobalt-Eisen-Legierung (FeCo), einer FeAl-Legierung, einer FeAlSi-Legierung oder Ferrit. Das Anordnen von Metallpartikeln im Bodenbereich 210 des Lagerbehälters ist wesentlich leichter vorzusehen, insbesondere beim Spritzgießen, als ein eigener Permanentmagnet an jedem Lagerbehälter.

Vorzugsweise ist das Metallstück bzw. sind die Metallpartikel in der Einlagerungsrichtung des Behälters an dessen Vorderseite und dessen Rückseite im Bodenbereich angeordnet. Dies könnte den Vorteil haben, dass die Einlagerungsrichtung des Behälters keine Rolle spielt, da in jedem Fall eine der Seiten mit dem entsprechenden Magneten des Lagerregals in Wirkkontakt beim Einlagern des Behälters geraten wird.

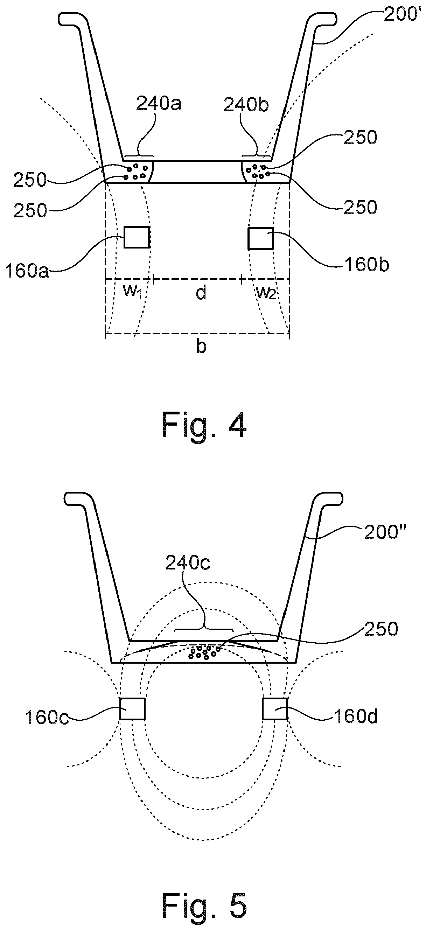

Fig. 4 zeigt eine Ausführungsform eines Lagerbehälters 200' mit zwei Permanentmagneten 160a und 160b, die gleichpolig und voneinander beabstandet angeordnet sind, wobei der Abstand d zuzüglich der beiden Breiten w1 + w2 = 2w1 = 2w2 im Wesentlichen der Breite b des Lagerbehälters 200' entspricht, b gleich ca. d + 2w2. In dem Lagerbehälter 200' können die Metallpartikeln gleichmäßig verteilt sein, es kann aber wie in der Darstellung gemäß Fig. 4 auch vorgesehen sein, dass nur im Bereich, wo das Magnetfeld der Permanentmagneten 160a, 160b besonders groß ist, siehe die dargestellten Bereiche 240a und 240b, Metallpartikeln 250 vorgesehen sind.

Umgekehrt können gemäß der Ausführungsform eines Lagerbehälters 200" in Fig. 5 die Permanentmagneten 160c und 160d gegenpolig ausgerichtet sein, so dass sich das Magnetfeld im Zwischenbereich verstärkt. In diesem Fall kann im Lagerbehälter 200" eher im mittigen Bereich 240c eine besonders hohe Anzahl an Metallpartikeln 250 vorgesehen sein.

Das Regalsystem gemäß der Erfindung aus dem Lagerregal 100 und zumindest einem der Lagerbehälter 200 hat den Vorteil, dass die Permanentmagnete 160 nur im Lagerregal vorgesehen werden müssen und nicht in den Lagerbehältern 200.

### Bezugszeichenliste

- 100: Lagerregal
- 110: vertikal stehende Regalstützen
- 120: horizontale Regalstreben
- 140: halboffene Profile
- 150: Schiene
- 160: Permanentmagnet
- 160a: Permanentmagnet
- 160b: Permanentmagnet
- 160c: Permanentmagnet
- 160d: Permanentmagnet
- 200: Lagerbehälter
- 200': Lagerbehälter
- 200": Lagerbehälter
- 210a: obere Bodenoberfläche
- 210b: untere Bodenoberfläche
- 230: Rippen
- 240a: Bereich des Lagerbehälters 200'
- 240b: Bereich des Lagerbehälters 200'
- 240c: mittiger Bereich
- 250: Metallpartikeln
- 260: Metallstück
- b: Breite
- d: Abstand
- w1, w2: Breiten

## Patentansprüche

1. Lagerregal (100) mit Fächern zur Aufnahme von Lagerbehältern (200, 200', 200"), wobei an zumindest einem der Fächer ein Magnet (160) angeordnet ist, um einen Lagerbehälter (200, 200', 200") zu fixieren.

2. Lagerregal (100) nach Anspruch 1, bei dem ein und vorzugsweise jeder Magnet als Permanentmagnet (160) ausgebildet ist.

3. Lagerregal (100) nach Anspruch 1 oder 2, bei dem jedes Fach eine Einführseite aufweist, von der her der jeweilige Lagerbehälter (200, 200', 200") einbringbar ist, wobei jeder jeweilige Magnet auf der der Einführseite gegenüberliegenden Seite des Faches angeordnet ist.

4. Lagerregal (100) nach einem der vorstehenden Ansprüche, wobei die Fächer Regalpaneele (130, 140) zur Bereitstellung einer Auflagefläche für die Lagerbehälter aufweisen, wobei jeder Magnet (160) an einem der Regalpaneele (130, 140) angeordnet ist.

5. Lagerregal (100) nach einem der vorstehenden Ansprüche, bei dem zu jedem Fach zwei der Magnete (160a, 160b; 160c, 160d) bereitgestellt sind, wobei jedes Fach eine sich in einer Regallängsrichtung erstreckende Einführseite aufweist, wobei die Polrichtung der beiden Magnete gleich oder genau umgekehrt ist und die beiden Magnete (160a, 160b; 160c, 160d) in der Regallängsrichtung zueinander versetzt angeordnet sind.

6. Lagerbehälter (200, 200', 200") für ein Lagerregal nach einem der vorstehenden Ansprüche, der einen Kunststoffkörper umfasst, wobei in den Kunststoffkörper Metall eingebracht ist, das von einem Magneten in einem Fach des Lagerregals magnetisierbar ist.

7. Lagerbehälter (200, 200', 200") nach Anspruch 6, bei dem das Metall weichmagnetisch ist.

8. Lagerbehälter (200, 200', 200") nach Anspruch 6 oder 7, bei dem das Metall in Form von in dem Kunststoff verteilten Partikeln(250) bereitgestellt ist.

9. Lagerbehälter (200, 200', 200") nach einem der Ansprüche 6 bis 8, bei dem das Metall zumindest und vorzugsweise ausschließlich in einem Bodenbereich (240a, 240b; 240c) des Lagerbehälters (200, 200', 200") bereitgestellt ist.

10. Lagersystem mit einem Lagerregal (100) nach einem der Ansprüche 1 bis 5 und mit zumindest einem in einem seiner Fächer eingelagerten und durch einen zugehörigen Magneten (160) fixierten Lagerbehälter (200, 200', 200") nach einem der Ansprüche 6 bis 9.

11. Lagersystem nach Anspruch 10 mit einem Regalshuttle.
